# EUROPEAN PATENT APPLICATION

(11) **EP 4 198 691 A1**
(43) Date of publication of application: **21.06.2023**
(21) Application number: 21214690.6
(22) Date of filing: 15.12.2021
(51) Int. Cl.: G06F 3/00, B25J 9/16, H04N 13/268, G06F 3/01

(54) **A METHOD AND SYSTEM OF TELEOPERATION WITH A REMOTE STREOSCOPIC VISION-THROUGH MIXED REALITY**

(71) Applicant: Deutsche Telekom AG, 53113 Bonn (DE)
(72) Inventor: YUN, Harrison Hongseo, 12203 Berlin (DE); HELMUT, Vivien, 12309 Berlin (DE)
(74) Representative: Vossius & Partner Patentanwälte Rechtsanwälte mbB

(57) **Abstract**

A method for providing a stereoscopic image in a teleoperation system is provided, comprising: obtaining motion tracking data for a motion of a first object at a teleoperation client, transmitting the motion tracking data of the first object from the teleoperation client to a teleoperation object, controlling a motion of a second object using the motion tracking data of the first object at the teleoperation object, wherein the second object comprises an optical sensing device and a depth sensing device, obtaining, while the motion of the second object is controlled, a monoscopic image by the optical sensing device, wherein the monoscopic image comprises an image of at least one third object and a background, and depth information of the at least one third object by the depth sensing device at a teleoperation object, generating a stereoscopic image of the at least one third object based on the monoscopic image and the depth information, and displaying the generated stereoscopic image at the teleoperation client

## Description

The present invention relates to a method, a teleoperation system, a teleoperation client and a teleoperation object for providing a stereoscopic image in a teleoperation system with a remote stereoscopic vision-through Mixed Reality (MR).

A teleoperation system is getting more attention since a demand from industry has been increased in many domains such as tele-driving of vehicles, teleoperation of industrial robots, and teleoperation of flying drones. A teleoperation system can enable an operator to control a target system as if an operator is on board and control the target system by moving his head, body, and hands while having a stereoscopic vision.

Furthermore, the advent of 5G mobile networks with many innovative technologies, such as network slicing technology and an adaptively managed latency, can intensify an improved mobility of remotely located objects in terms of a wider coverage and a shorter latency.

In a teleoperation system, a human operator at a teleoperation client may wear a Virtual Reality (VR) Head-Mounted Display (HMD) device or a Mixed Reality (MR) HMD device so that the operator can have stereoscopic image data captured and retrieved from a remote camera system equipped in a teleoperation object, i.e. a target system for teleoperation. For instance, in automotive industry, a teleoperation system can provide tele-driving of a car as a concept compared to self-driving. In this scenario, a human driver can drive a remotely located car by a simultaneous interaction between the driver's hands and steering wheels in a car. For this, the human driver needs to see the driver's surroundings in a stereoscopic vision through VR HMD or MR HMD devices as if he is seating on the driver's seat in the car. In an example of flying a drone, a human operator can control a drone by a VR controller or an MR controller, and at the same time, the operator can see the front in a stereoscopic vision through a VR HMD or an MR HMD device as if the driver is on board in the flying drone. In an example of robot industry, a human operator can operate the robot by synchronizing movements of the human's body such as the head, torso, hands and/or arms with movements of a robot's body such as the head, torso, hands, and arms. The human operator sees the front in a stereoscopic vision as if he is located where a robot is under operation.

Meanwhile, VR HMD glass or MR HMD glass devices may be optimal devices with which a human is provided with a stereoscopic vision since neither a 3D TV nor a 3D monitor is available in the market. A development of a VR HMD glass or an MR HMD glass device can lead to an improvement of a vision quality and resolution, e.g. by providing a full six degree-of-freedom tracking capability in a precise manner. A teleoperation service for a remotely-located target system can be provided by synchronization of a human vision with a remote camera system providing a stereoscopic vision and by synchronization of human's body movements with movements of any moving parts of target systems.

However, a stereoscopic vision provided by a conventional method using a camera in the target system (i.e. at the teleoperation object) contains several errors in depth in its stereoscopic vision, since in the conventional method a stereoscopic vision is generated based on a small-angle difference in a right image and a left image, each of which is captured from a right camera lens and a left camera lens, respectively. This causes not only an error in an estimation of a distance from an envisaged position of the operator at the target system to the front object (i.e. the distance from the camera in the target system to the front object), but also a dizziness and sickness of the operator during teleoperation. Furthermore, in case of some tasks requiring a high precision in distance, the error in a distance estimation may be critical.

Against this background, it is an object of the present invention to provide a method, a teleoperation system, a teleoperation system, a teleoperation client and a teleoperation object for providing a stereoscopic image in teleoperation, which obviate disadvantages of teleoperation with a stereoscopic vision provided according to the prior art.

According to an aspect of the invention, a method for providing a stereoscopic image in a teleoperation system is provided, comprising: obtaining motion tracking data for a motion of a first object at a teleoperation client, transmitting the motion tracking data of the first object from the teleoperation client to a teleoperation object, controlling a motion of a second object using the motion tracking data of the first object at the teleoperation object, wherein the second object comprises an optical sensing device and a depth sensing device, obtaining, while the motion of the second object is controlled, a monoscopic image by the optical sensing device, wherein the monoscopic image comprises an image of at least one third object and a background, and depth information of the at least one third object by the depth sensing device at a teleoperation object, generating a stereoscopic image of the at least one third object based on the monoscopic image and the depth information, and displaying the generated stereoscopic image at the teleoperation client.

A first object is an object at a teleoperation client (for example, an HMD device) whose motion is emulated by a second object at the teleoperation object (for example, a robot head, a car or a drone) while an optical sensing device of the second object generates a monoscopic image for the second object's front. A third object is an object in front of the second object (for example, a robot hand or an object to be manipulated by a robot hand or an obstacle in front of a car or a drone) whose image is to be displayed to the operator for the teleoperation. By generating a stereoscopic image of the third object according to the method, a stereoscopic image representing a 3D depth with a high precision may be provided. This facilitates the operator's estimation on a distance from the optical sensing device to the third object which represents a distance between an envisaged position of the operator at the teleoperation object to the third object for the teleoperation.

Thus, the present invention provides an improved way of operating a remotely located target systems by synchronizing between a human operator and the teleoperation object not only motions but also a stereoscopic vision which enables an improved distance estimation.

According to a further aspect of the invention, the generating a stereoscopic image of the at least one third object comprises: detecting an edge of the at least one third object on the monoscopic image based on the depth information, extracting an image of the at least one third object from the monoscopic image based on the detected edge, and generating the stereoscopic image of the at least one third object based on a right image of the at least one third object and a left image of the at least one third object, wherein the right image of the at least one third object is generated based on the extracted image of the at least one third object and the depth information and the left image of the at least one third object is generated based on the extracted image of the at least one third object and the depth information. Preferably, the method further comprises combining the generated stereoscopic image of the at least one third object and the background.

According to a further aspect of the invention, the generating a stereoscopic image is carried out at the teleoperation client and/or at the teleoperation object. If the generating a stereoscopic image is carried out at the teleoperation object, the method further comprises encoding the generated stereoscopic image at the teleoperation object, transmitting the encoded stereoscopic image from the teleoperation object to the teleoperation client and decoding the received encoded stereoscopic image at the teleoperation client. If the generating a stereoscopic image is carried out at the teleoperation client, the method further comprises encoding the monoscopic image at the teleoperation object, transmitting the encoded monoscopic image and the depth information from the teleoperation object to the teleoperation client and decoding the received encoded monoscopic image at the teleoperation client.

Preferably, the method for providing a stereoscopic image in a teleoperation system further comprises performing asynchronous time warping and/or a lens distortion correction of the stereoscopic image.

According to an aspect of the invention, a teleoperation system comprising a teleoperation client and a teleoperation object is provided, wherein the teleoperation system is configured for providing a stereoscopic image according to the method of any of preceding aspects.

According to an aspect of the invention, a teleoperation client for providing a stereoscopic image in a teleoperation system is provided, comprising: motion tracking means configured to obtain motion tracking data for a motion of a first object, a transmitter configured to transmit the motion tracking data of the first object to a teleoperation object, a receiver configured to receive a monoscopic image, wherein the monoscopic image comprises an image of at least one third object and a background, and depth information of the at least one third object from the teleoperation object, a processor configured to generate a stereoscopic image of the at least one third object based on the received monoscopic image and the received depth information, and a display device configured to display the stereoscopic image.

According to a further aspect of the invention, the processor of the teleoperation client is configured to generate the stereoscopic image by: detecting an edge of the at least one third object on the monoscopic image based on the depth information, extracting an image of the at least one third object from the monoscopic image based on the detected edge, and generating the stereoscopic image of the at least one third object based on a right image of the at least one third object and a left image of the at least one third object, wherein the right image of the at least one third object is generated based on the extracted image of the at least one third object and the depth information and the left image of the at least one third object is generated based on the extracted image of the at least one third object and the depth information.

Preferably, the processor of the teleoperation client is further configured to combine the generated stereoscopic image of the at least one third object and the background.

Preferably, the processor of the teleoperation client is further configured to perform asynchronous time warping and/or a lens distortion correction of the stereoscopic image.

Preferably, the first object comprises a Mixed Reality, MR, Head Mounted Display, HMD, glass device, the MR HMD glass device comprising the motion tracking means, the transmitter, the receiver, the processor and the display device.

According to an aspect of the invention, a teleoperation object for providing a stereoscopic image in a teleoperation system is provided, comprising: a receiver configured to receive motion tracking data of a first object from the teleoperation client, a processor configured to control a motion of a second object using the received motion tracking data of the first object, wherein the second object comprises an optical sensing device and a depth sensing device, wherein the optical sensing device is configured to obtain a monoscopic image, wherein the monoscopic image comprises an image of at least one third object and a background, and the depth sensing device is configured to obtain depth information of the at least one third object, while the motion of the second object is controlled, wherein the processor is further configured to generate a stereoscopic image of the at least one third object based on the monoscopic image and the depth information.

According to a further aspect of the invention, the processor of the teleoperation object is configured to generate the stereoscopic image by: detecting an edge of the at least one third object on the monoscopic image based on the depth information, extracting an image of the at least one third object from the monoscopic image based on the depth information, and generating the stereoscopic image of the at least one third object based on a right image of the at least one third object and a left image of the at least one third object, wherein the right image of the at least one third object is generated based on the extracted image of the at least one third object and the depth information and the left image of the at least one third object is generated based on the extracted image of the at least one third object and the depth information.

Preferably, the processor of the teleoperation object is further configured to combine the generated stereoscopic image of the at least one third object and the background.

The term "image" is used to indicate a still image and/or a video. The term "right image" is used to indicate an image representing an image of an object sensed by a right optical sensing device located on a right side of the line of sight of an optical sensing device provided to sense a monoscopic image. Similarly, the term "left image" is used to indicate an image representing an image of the object sensed by a left optical sensing device located on a left side of the line of sight of the optical sensing device provided to sense the monoscopic image.

Other aspects, features, and advantages will be apparent from the summary above, as well as from the description that follows, including the figures and the claims.

### BRIEF DESCRIPTION OF THE DRAWINGS

- Fig. 1: shows a teleoperation system with a remote stereoscopic Vision-through Mixed Reality according to an embodiment of the invention.
- Fig. 2: shows a flow diagram for a method carried out by a teleoperation system with a remote stereoscopic vision-through Mixed Reality according to an embodiment of the invention.

### DETAILED DESCRIPTION OF THE DRAWINGS

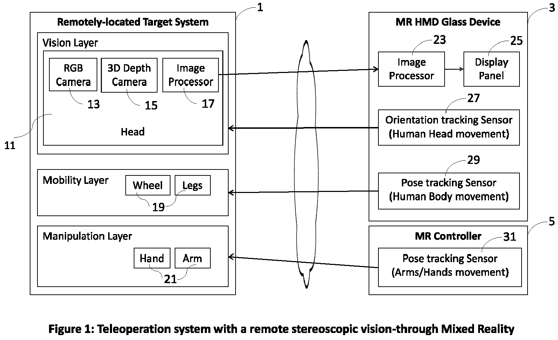

Fig. 1 shows a teleoperation system with a remote stereoscopic vision-through Mixed Reality (MR) according to an embodiment of the invention.

A teleoperation system comprises a teleoperation object, i.e. a remotely-located target system 1 and a teleoperation client, e.g. an MR Head-Mounted Display (HMD) device 3. Instead of an MR HMD device, a VR HMD device may be used. The teleoperation object and the teleoperation client are connected by a telecommunication network such as a LAN, 4G, 5G, etc.

A remotely-located target system 1 may comprise a vision layer, a mobility layer and a manipulation layer. The remotely-located target system 1 may be implemented in various devices or systems such a vehicle, a drone or a robot for different use cases.

The vision layer may comprise an RGB camera 13 for generating a monoscopic image of an object, a 3D depth camera 15 for sensing a distance from the 3D depth camera 15 to an object in front of the 3D depth camera and an image processor 17 and provide a front view of the teleoperation object. If the remotely-located target system 1 is implemented in a robot, the RGB camera 13 and the 3D depth camera 15 may be mounted on a robot head, e.g. between the robot's eyes. The image processor 17 may be mounted on a robot head or another part of the robot such as a robot body. If the remotely-located target system 1 is implemented in a vehicle or a drone, the RGB camera 13 and the 3D depth camera 15 may be mounted on a part of the vehicle or the drone facing the front.

The mobility layer may provide mobility to the teleoperation object and comprise, for example, one or more wheel(s) and/or robot leg(s) 19. The manipulation layer may enable the teleoperation object to manipulate an external object. The manipulation layer may comprise, for example, one or more robot hand(s) and/or arm(s) 21.

The teleoperation client may comprise an MR HMD device 3. The MR HMD device 3 may comprise an image processor 23, a display panel 25 and a motion tracking sensor such as an orientation tracking sensor 27 and a pose tracking sensor 29.

The method for providing a stereoscopic image in a teleoperation system according to an embodiment of the present invention is explained more in detail in reference to Fig. 1.

In the remotely-located target system 1, the 3D depth camera 15 may be provided together with the RGB camera 13. Both of the 3D depth camera 15 and the RGB camera 13 may be provided on a part of the teleoperation object, e.g. on a part facing the front of the teleoperation object, for generating an image in front of the teleoperation object which may correspond to a vision of an operator at the teleoperation client.

The 3D depth camera 15 may be a high-resolution depth camera sensor based on infrared (IR), ultra-sonic, laser technology or a combination of any of these. The 3D depth camera 15 may measure a distance from an object in front of the teleoperation object to the 3D depth camera to obtain depth data. The depth data may be transferred to the image processor 17 in the remotely-located target system 1. At the same time, the RGB camera 13 obtains the RGB data comprising a monoscopic image of the object in front of the teleoperation object and transfers the obtained data to the image processor 17.

The image processor 17 may map the RGB data and the depth data for each pixel. Based on the mapping, the image processor 17 may detect an edge for an object in front of the teleoperation object based on a depth discontinuity and extract the image of the object from the RGB data comprising the image of the object and a background. The image of each object may be relocated based on the depth data of each pixel to generate a right image and a left image that form a stereoscopic image. The stereoscopic image generated at the teleoperation object is transmitted to the teleoperation client, e.g. to the MR HMD device 3.

The image processor 23 of the MR HMD device 3 may further optimize the generated stereoscopic image for the operator, e.g. by using calibration data and perform asynchronous time warping and/or a lens distortion correction of the stereoscopic image. The image processor 23 transfers the stereoscopic image to a display panel 25.

The operator can thus see and estimate the physical depth from the object in front of the teleoperation object through the display panel 25. Since the stereoscopic image is not based on a small-angle difference between the left and right image but is generated based on precise depth data measured by the high-resolution depth camera sensor, it can provide a precise stereoscopic vision which represents the precise distance or depth from the teleoperation object controlled by the operator to the front object.

When the operator moves the head, the movement may be detected by a motion tracking sensor 27 which is provided to detect the operator's movement. The motion tracking sensor 27 generates motion tracking data. If an orientation tracking sensor 27 and/or a pose tracking sensor 29 are mounted on the MR HMD device 3 as a motion tracking sensor, the movement of the operator's head while the operator is wearing the MR HMD device 3 may be detected by the orientation tracking sensor 27 and/or the pose tracking sensor 29.

The motion tracking data is transmitted from the MR HMD device 3 to the remotely-located target system 1. If the remotely-located target system 1 may be controlled based on the motion tracking data received. For example, if the remotely-located target system 1 is implemented in a robot, a motion of the robot head and/or the robot body may be controlled based on the motion tracking data such that the motion of the robot head and/or the robot body is synchronized with the motion of the operator's head and/or the operator's body.

The RGB camera 13 and the 3D depth camera are controlled to move in synchronization with the movement of the operator to reproduce a change of his vision due to the operator's movement. If the RGB camera 13 and the 3D depth camera 15 are mounted on the robot head, the movement of the robot head may be controlled to be synchronized with the movement of the operator's head. Thus, the stereoscopic image generated based on the RGB data obtained by the RGB camera 13 and the depth data obtained by the 3D depth camera 15 reflects the operator's vision change at the teleoperation object in the Mixed Reality.

The operator may further use an MR controller 31 or wear an MR glove. The MR controller 31 or the MR glove may comprise a motion tracking sensor such as one or more pose tracking sensor(s) 31 for detecting a movement of the operator's arm(s) and/or hand(s) for generating the motion tracking data for the movement of the operator's arm(s) and/or hand(s). The motion tracking data may be transmitted to the remotely-located target system 1. If the remotely-located target system is implemented in a robot, the robot hand(s) and/or arm(s) 21 may be controlled based on the motion tracking data to be synchronized with the movement of the operator's arm(s) and/or hand(s).

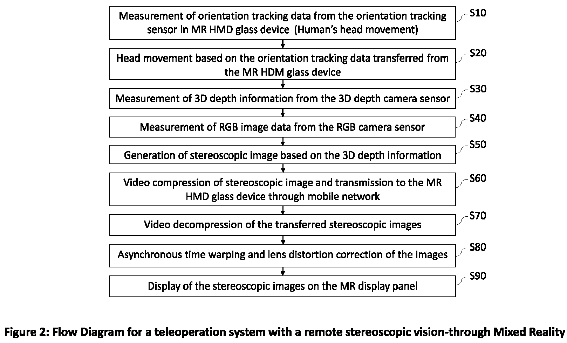

Fig. 2 shows a flow diagram for a method carried out by a teleoperation system with a remote stereoscopic vision through Mixed Reality according to an embodiment of the invention.

In step S10, motion tracking data such as an orientation tracking data for an operator's head movement is detected at a teleoperation client by a motion tracking sensor such as an orientation tracking sensor in an MR HMD glass device. In step S20, the motion tracking data is transmitted from the MR HDM glass device to the teleoperation object and the motion of the teleoperation object is controlled based the motion tracking data received at the teleoperation object.

In steps S30 and S40, at the teleoperation, 3D depth information and RGB data is obtained by a 3D depth sensor and an RGB camera sensor, respectively. Based on the RGB data and the 3D depth information, a stereoscopic image for an object in front of the teleoperation object is generated in step S50 by generating a left image and a right image for the object.

The generated stereoscopic image is encoded and transmitted to the MR HMD device at the teleoperation client through a telecommunication network in S60. In step S70, the received stereoscopic image is decoded at the teleoperation client. After performing asynchronous time warping and lens distortion correction of the image in step S80, the stereoscopic image is displayed on a display panel of the MR HMD device in step S90.

What has been described and illustrated herein are embodiments of the invention along with some of variations. The terms, descriptions and figures used herein are set forth by way of illustration only and are not meant as limitations. Those skilled in the art will recognize that many variations are possible within the scope of the invention, which is intended to be defined by the following claims - and their equivalents - in which all terms are meant in their broadest reasonable sense unless otherwise indicated. In particular, the present invention covers further embodiments with any combination of features from different embodiments described above.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method for providing a stereoscopic image in a teleoperation system, comprising:
obtaining (S10) motion tracking data for a motion of a first object at a teleoperation client,
transmitting (S20) the motion tracking data of the first object from the teleoperation client to a teleoperation object,
controlling (S20) a motion of a second object using the motion tracking data of the first object at the teleoperation object, wherein the second object comprises an optical sensing device and a depth sensing device,
obtaining (S30, S40), while the motion of the second object is controlled, a monoscopic image by the optical sensing device, wherein the monoscopic image comprises an image of at least one third object and a background, and depth information of the at least one third object by the depth sensing device at a teleoperation object,
generating (S50) a stereoscopic image of the at least one third object based on the monoscopic image and the depth information, and
displaying (S90) the generated stereoscopic image at the teleoperation client.

2. The method according to claim 1, wherein the generating a stereoscopic image of the at least one third object comprises:
detecting an edge of the at least one third object on the monoscopic image based on the depth information,
extracting an image of the at least one third object from the monoscopic image based on the detected edge, and
generating the stereoscopic image of the at least one third object based on a right image of the at least one third object and a left image of the at least one third object, wherein the right image of the at least one third object is generated based on the extracted image of the at least one third object and the depth information and the left image of the at least one third object is generated based on the extracted image of the at least one third object and the depth information.

3. The method according to claim 2, wherein the method further comprises combining the generated stereoscopic image of the at least one third object and the background.

4. The method according to any one of claims 1 to 3, wherein the generating a stereoscopic image is carried out at the teleoperation client and/or at the teleoperation object, and wherein:
if the generating a stereoscopic image is carried out at the teleoperation object, the method further comprises:
encoding (S60) the generated stereoscopic image at the teleoperation object,
transmitting (S60) the encoded stereoscopic image from the teleoperation object to the teleoperation client and
decoding the (S70) received encoded stereoscopic image at the teleoperation client,
if the generating a stereoscopic image is carried out at the teleoperation client, the method further comprises:
encoding the monoscopic image at the teleoperation object,
transmitting the encoded monoscopic image and the depth information from the teleoperation object to the teleoperation client and
decoding the received encoded monoscopic image at the teleoperation client.

5. The method according to any one of claims 1 to 4, further comprising:
performing (S80) asynchronous time warping and/or a lens distortion correction of the stereoscopic image.

6. A teleoperation system comprising a teleoperation client and a teleoperation object, the teleoperation system being configured for providing a stereoscopic image according to any one of claims 1 to 5.

7. A teleoperation client (3) for providing a stereoscopic image in a teleoperation system, comprising:
motion tracking means (27, 29, 31) configured to obtain motion tracking data for a motion of a first object,
a transmitter configured to transmit the motion tracking data of the first object to a teleoperation object,
a receiver configured to receive a monoscopic image, wherein the monoscopic image comprises an image of at least one third object and a background, and depth information of the at least one third object from the teleoperation object,
a processor (23) configured to generate a stereoscopic image of the at least one third object based on the received monoscopic image and the received depth information, and
a display device (25) configured to display the stereoscopic image.

8. The teleoperation client according to claim 7, wherein the processor (23) is configured to generate the stereoscopic image by:
detecting an edge of the at least one third object on the monoscopic image based on the depth information,
extracting an image of the at least one third object from the monoscopic image based on the detected edge, and
generating the stereoscopic image of the at least one third object based on a right image of the at least one third object and a left image of the at least one third object, wherein the right image of the at least one third object is generated based on the extracted image of the at least one third object and the depth information and the left image of the at least one third object is generated based on the extracted image of the at least one third object and the depth information.

9. The teleoperation client according to claim 8, wherein the processor (23) is further configured to combine the generated stereoscopic image of the at least one third object and the background.

10. The teleoperation client according to any one of claims 7 to 9, wherein the processor (23) is further configured to perform asynchronous time warping and/or a lens distortion correction of the stereoscopic image.

11. The teleoperation client according to any one of claims 7 to 10, wherein the first object comprises a Mixed Reality, MR, Head Mounted Display, HMD, glass device, the MR HMD glass device comprising the motion tracking means, the transmitter, the receiver, the processor and the display device.

12. A teleoperation object (1) for providing a stereoscopic image in a teleoperation system, comprising:
a receiver configured to receive motion tracking data of a first object from the teleoperation client,
a processor (17) configured to control a motion of a second object using the received motion tracking data of the first object, wherein the second object comprises an optical sensing device (13) and a depth sensing device (15),
wherein the optical sensing device (13) is configured to obtain a monoscopic image, wherein the monoscopic image comprises an image of at least one third object and a background, and the depth sensing device (15) is configured to obtain depth information of the at least one third object, while the motion of the second object is controlled,
wherein the processor (17) is further configured to generate a stereoscopic image of the at least one third object based on the monoscopic image and the depth information.

13. The teleoperation object according to claim 12, wherein the processor is configured to generate the stereoscopic image by:
detecting an edge of the at least one third object on the monoscopic image based on the depth information,
extracting an image of the at least one third object from the monoscopic image based on the depth information, and
generating the stereoscopic image of the at least one third object based on a right image of the at least one third object and a left image of the at least one third object, wherein the right image of the at least one third object is generated based on the extracted image of the at least one third object and the depth information and the left image of the at least one third object is generated based on the extracted image of the at least one third object and the depth information.

14. The teleoperation object according to claim 13, wherein the processor (17) is further configured to combine the generated stereoscopic image of the at least one third object and the background.

## Amended claims

### Amended claims in accordance with Rule 137(2) EPC.

1. A method for providing a stereoscopic image in a teleoperation system, comprising:
obtaining (S10) motion tracking data for a motion of a first object at a teleoperation client,
transmitting (S20) the motion tracking data of the first object from the teleoperation client to a teleoperation object,
controlling (S20) a motion of a second object using the motion tracking data of the first object at the teleoperation object, wherein the second object comprises an optical sensing device and a depth sensing device,
obtaining (S30, S40), while the motion of the second object is controlled, a monoscopic image by the optical sensing device, wherein the monoscopic image comprises an image of at least one third object and a background, and depth information of the at least one third object by the depth sensing device at a teleoperation object,
generating (S50) a stereoscopic image of the at least one third object based on the monoscopic image and the depth information, and
displaying (S90) the generated stereoscopic image at the teleoperation client.

2. The method according to claim 1, wherein the generating a stereoscopic image of the at least one third object comprises:
detecting an edge of the at least one third object on the monoscopic image based on the depth information,
extracting an image of the at least one third object from the monoscopic image based on the detected edge, and
generating the stereoscopic image of the at least one third object based on a right image of the at least one third object and a left image of the at least one third object, wherein the right image of the at least one third object is generated based on the extracted image of the at least one third object and the depth information and the left image of the at least one third object is generated based on the extracted image of the at least one third object and the depth information.

3. The method according to claim 2, wherein the method further comprises combining the generated stereoscopic image of the at least one third object and the background.

4. The method according to any one of claims 1 to 3, wherein the generating a stereoscopic image is carried out at the teleoperation client and/or at the teleoperation object, and wherein:
if the generating a stereoscopic image is carried out at the teleoperation object, the method further comprises:
encoding (S60) the generated stereoscopic image at the teleoperation object,
transmitting (S60) the encoded stereoscopic image from the teleoperation object to the teleoperation client and
decoding the (S70) received encoded stereoscopic image at the teleoperation client,
if the generating a stereoscopic image is carried out at the teleoperation client, the method further comprises:
encoding the monoscopic image at the teleoperation object,
transmitting the encoded monoscopic image and the depth information from the teleoperation object to the teleoperation client and
decoding the received encoded monoscopic image at the teleoperation client.

5. A teleoperation system comprising a teleoperation client and a teleoperation object, the teleoperation system being configured for providing a stereoscopic image according to any one of claims 1 to 4.

6. A teleoperation client (3) for providing a stereoscopic image in a teleoperation system, comprising:
motion tracking means (27, 29, 31) configured to obtain motion tracking data for a motion of a first object,
a transmitter configured to transmit the motion tracking data of the first object to a teleoperation object,
a receiver configured to receive a monoscopic image, wherein the monoscopic image comprises an image of at least one third object and a background, and depth information of the at least one third object from the teleoperation object,
a processor (23) configured to generate a stereoscopic image of the at least one third object based on the received monoscopic image and the received depth information, and
a display device (25) configured to display the stereoscopic image.

7. The teleoperation client according to claim 6, wherein the processor (23) is configured to generate the stereoscopic image by:
detecting an edge of the at least one third object on the monoscopic image based on the depth information,
extracting an image of the at least one third object from the monoscopic image based on the detected edge, and
generating the stereoscopic image of the at least one third object based on a right image of the at least one third object and a left image of the at least one third object, wherein the right image of the at least one third object is generated based on the extracted image of the at least one third object and the depth information and the left image of the at least one third object is generated based on the extracted image of the at least one third object and the depth information.

8. The teleoperation client according to claim 7, wherein the processor (23) is further configured to combine the generated stereoscopic image of the at least one third object and the background.

9. The teleoperation client according to any one of claims 6 to 8, wherein the processor (23) is further configured to perform asynchronous time warping and/or a lens distortion correction of the stereoscopic image.

10. The teleoperation client according to any one of claims 6 to 9, wherein the first object comprises a Mixed Reality, MR, Head Mounted Display, HMD, glass device, the MR HMD glass device comprising the motion tracking means, the transmitter, the receiver, the processor and the display device.

11. A teleoperation object (1) for providing a stereoscopic image in a teleoperation system, comprising:
a receiver configured to receive motion tracking data of a first object from the teleoperation client,
a processor (17) configured to control a motion of a second object using the received motion tracking data of the first object, wherein the second object comprises an optical sensing device (13) and a depth sensing device (15),
wherein the optical sensing device (13) is configured to obtain a monoscopic image, wherein the monoscopic image comprises an image of at least one third object and a background, and the depth sensing device (15) is configured to obtain depth information of the at least one third object, while the motion of the second object is controlled,
wherein the processor (17) is further configured to generate a stereoscopic image of the at least one third object based on the monoscopic image and the depth information.

12. The teleoperation object according to claim 11, wherein the processor is configured to generate the stereoscopic image by:
detecting an edge of the at least one third object on the monoscopic image based on the depth information,
extracting an image of the at least one third object from the monoscopic image based on the depth information, and
generating the stereoscopic image of the at least one third object based on a right image of the at least one third object and a left image of the at least one third object, wherein the right image of the at least one third object is generated based on the extracted image of the at least one third object and the depth information and the left image of the at least one third object is generated based on the extracted image of the at least one third object and the depth information.

13. The teleoperation object according to claim 12, wherein the processor (17) is further configured to combine the generated stereoscopic image of the at least one third object and the background.
